# EUROPEAN PATENT SPECIFICATION

(11) **EP 3 981 139 B1**
(45) Date of publication and mention of the grant of the patent: **13.12.2023**
(21) Application number: 20729765.6
(22) Date of filing: 04.06.2020
(51) Int. Cl.: H04N 1/405

(54) **A METHOD OF DIGITAL HALFTONING**
VERFAHREN ZUR DIGITALEN RASTERUNG
PROCÉDÉ DE TRAMAGE NUMÉRIQUE

(30) Priority: 05.06.2019 EP 19178311
(43) Date of publication of application: 13.04.2022
(73) Proprietor: ECO3 BV, 2640 Mortsel (BE)
(72) Inventor: BARTELS, Rudolf, 2640 Mortsel (BE)
(74) Representative: Van Garsse, Joris Marc H
(86) International application number: PCT/EP2020/065517
(87) International publication number: WO 2020/245290

(56) References cited:
- WO-A1-2019/081493
- US-A1- 2002 051 147
- US-A1- 2007 002 384

## Description

### Technical Field

The invention relates to the field of digital halftoning methods used for printing images, in particular by a lithographic or flexographic printing press.

### Background Art

Printing presses and digital printers cannot vary the amount of ink or toner that is applied to particular image areas except through digital halftoning, also called dithering or screening. Binary digital halftoning is the process of rendering the illusion of a continuous-tone image by means of a halftone raster image (also called "screen") which consists of pixels (also called "microdots"), which are either "on" (image pixels) or "off" (non-image pixels), i.e. which correspond respectively to image areas and background areas of the image.

These pixels are typically arranged as a grid in so-called halftone cells. The ratio of image pixels versus non-image pixels in a halftone cell defines the relative image density, also dot percentage, of the halftone cell. A halftone cell wherein half of the pixels are image pixels and half are non-image pixels, has a relative image density of 50%. Halftone cells which represent highlights (white areas) of the image, have an image density which is lower than 50% and halftone cells which represent shadows (darker areas) of the image, have an image density which is higher than 50%.

Digital halftoning is a well-known technique, which is explained in e.g. "Digital Halftoning", MIT Press, 1987, ISBN 0-262-21009-6, wherein chapter 5 about 'clustered-dot ordered dither' is background art for the present invention including the use of threshold arrays for rendering continuous-tone images. Another overview of digital halftoning methods is disclosed in the article "Recent trends in digital halftoning", Proc. SPIE 2949, Imaging Sciences and Display Technologies, (7 February 1997); doi: 10.1117/12.266335wherein also multilevel digital halftoning is explained.

The most commonly used screening technique produces so called amplitude-modulated (AM) screens. AM screens have halftone cells wherein the image pixels are grouped in a single cluster, which is often called a "(halftone) dot" or "AM dot", not to be confused with the above mentioned microdot (=pixel). In AM screening, a higher relative image density is obtained by growing the size of the dot cluster. When printing an AM image, e.g. with a printing press or a digital inkjet printer, each AM dot corresponds to a certain amount of ink, called further a blob, which is pressed or jetted onto the substrate to be printed, dried and/or cured. Especially when multiple inks (colour selections) are to be printed on top of each other, whether wet-on-wet or wet-on-(semi)dry, the spreading of the ink, which is determined by the thickness of the blob and the local (de)wetting on and/or the absorption of the ink by the substrate, renders the printed blob locally uncontrollable. As a result, the printed image may show noise, and this problem is often depended on the nature of the substrate.

US2007002384 A1 (SAMWORTH MARK) discloses a halftoning method whereby multiple threshold arrays are used for halftoning a gray image and wherein the halftone dots are concentric circles within a halftone cell, having a square-shape. WO2019081493 A1 (AGFA NV) discloses a halftoning method wherein each halftone dot has an element with a spiral shape and wherein said halftone dot is formed within a halftone cell, having a rectangular-shape.

Further said AM halftone dots are arranged according a screen frequency and screen angle whereby in the mid-tones of the halftone raster image a periodic pattern occur when halftone dots touches each other. This is caused by a moiré interaction between screen frequency, screen angle and resolution of the halftone raster image. Said periodic pattern, caused by said spatial discretization effects, results in noisy and grainy halftone raster image, especially in the mid-tones.

Such problems can be addressed by other screening technologies such as FM (frequency modulated) screening or techniques involving error diffusion. In both these techniques, the microdots are not grouped into clusters but spread more or less randomly over the image. The local image density is modulated by the frequency of the microdots. However also these techniques are characterized by other issues like print stability, poor smoothness of flat tones, higher dot gain and higher wear of printing plates in long print runs.

### Summary of invention

It is an object of the present invention to provide a method of digital halftoning a continuous-tone image into a halftone raster image which allows to save ink when said halftone raster image is used in lithography or flexography or in a digital printing method, such as an inkjet printing. The present invention has the advantage for easy implementation in the wide installed base of prepress computer systems with a limited amount of memory and/or processing power.

This problem is solved by the method defined in claim 1 wherein a continuous tone image is halftoned into a halftone raster image having halftone cells wherein each halftone cell has a shape; wherein the method comprises the step of generating a halftone dot in said halftone cell with a threshold array for determining non-image pixels and image pixels in said halftone cell and wherein said non-image pixels represent a first closed contour and image pixels represent a second closed contour; and wherein said first closed contour and/or second closed contour has a morphologic image processed shape from the shape of said halftone cell.

The digital halftoning method of the present invention is preferably performed by a data processing system, which is adapted to perform said digital halftoning method. Said data processing system is preferably a raster image processor (RIP) or a prepress workflow system.

The periodic pattern, caused by said spatial discretization effects which occur with AM halftone dots and their regularly tiled halftone cells, is with the present invention also solved.

### Brief description of drawings

Figures from 1 to 5 show each a halftone raster image with at the right a vertical vignette from highlights at the bottom to the shadows at the top. At the left top of the halftone raster image is a shadow, at the left bottom it is a mid-tone. Said halftone raster images are generated according the present invention or its preferred embodiments. The shape of the halftone cells in said figures has four edges, wherein one is minimum not a straight edge.
Figures from 6 to 9 show each a halftone cell generated by one of the embodiments of the present invention wherein the halftone cell is located between the wavy dashed line and wherein said halftone cell comprises a halftone dot with a plurality of closed contours, represented by image pixels, such as closed contour with reference 100 and a plurality of closed contours, represented by non-image pixels, such as closed contour with reference 200. Closed contour with reference 300 is an outer closed contour, represented by image pixels, the others are inner closed contours. The shape of the halftone cell has 4 edges wherein each edge represents a sinusoid. The inner closed contours and outer closed contours have all a morphed shape of the shape of said halftone cell.

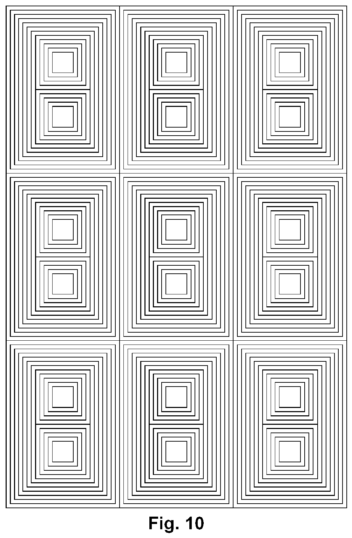

Figure 10 shows 3x3 rectangular halftone cells, which are regularly tiled. Said halftone cells from a halftone raster image generated by one of the embodiments of the present invention and wherein multiple closed contours, represented by image pixels, are shown within an outer closed contour, represented by other image pixels.

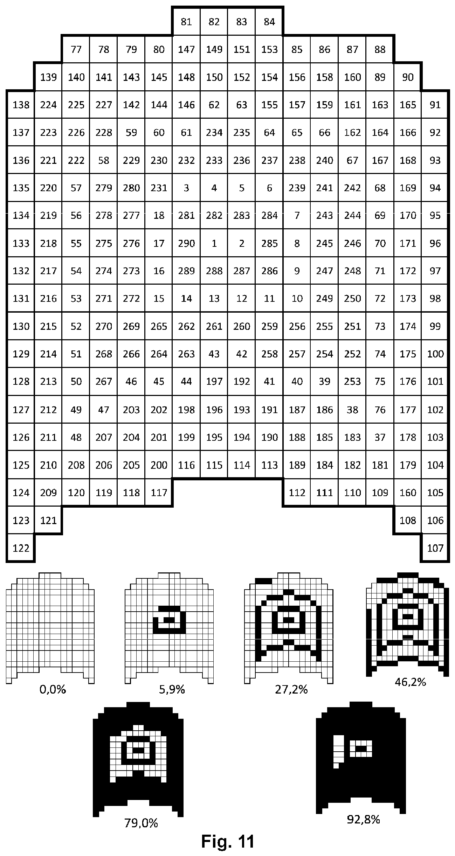

Figure 11 shows a threshold array that has the shape of a tile that can be used in a tessellation to form a halftone raster image according the present invention. Below the threshold array some halftone dots, generated with said threshold array, are visualized for certain densities, here expressed in percentage. The top and bottom edge of said tile are arced with the same curving to make a tessellation possible. Said arced edges are herein discretized.

### Description of embodiments

The present invention is a method as defined in claim 1.

In the highlights of the halftone raster image the halftone dots from the present invention grows in length and/or grows in thickness with image pixels along the second closed contour (100) when the density in the continuous tone image becomes darker. The image pixels in said growing halftone dot when the density in the continuous tone image becomes darker represents said second closed contour (100) but in the highlights said second closed contour (100) is still an arc or a simple line. As the density becomes darker said arc or simple straight line grows to a line that represents said second closed contour (100). In the shadows of the halftone raster image the halftone dots from the present invention the first closed contour (200) shrinks in length and/or in thickness when the density in the continuous tone image becomes darker. When said second closed contour, represented by the image pixels is almost closed or fully closed a following contour represented by other image pixels may be growing in length and/or thickness. Contrary to conventional AM dots, the negative halftone dot (formed with non-image pixels) in the present invention is represented in the positive halftone dot (formed with image pixels) so no position translation between the negative and positive halftone dots occur from highlight to shadow. A negative halftone dot is sometimes called an inverse halftone dot. The negative halftone dot has in the present invention a similarity with the positive halftone dot because their shapes are morphed from the same shape of the halftone cell. The second closed contour (100) may still have non-image pixels as if said contour is not definitely closed.

Said morphed shape is a morphologic image processed shape which is an eroded shape but preferably said method additional comprises the following step of determining an other shape, smaller than the shape of the halftone cell; and wherein said morphologic image processed shape is a blended shape generated between said shape and said other shape. Morphology is a broad set of image processing operations that process images based on shapes.... In a morphological operation, the value of each pixel in the output image is based on a comparison of the corresponding pixel in the input image with its neighbors. The most basic morphological operations are dilation and erosion. Dilation adds pixels to the boundaries of objects in an image, while erosion removes pixels on object boundaries. The number of pixels added or removed from the objects in an image depends on the size and shape of the structuring element used to process the image. In the morphological dilation and erosion operations, the state of any given pixel in the output image is determined by applying a rule to the corresponding pixel and its neighbors in the input image. The rule used to process the pixels defines the operation as a dilation or an erosion. Blending from one shape to another shape is for example implemented in Illustrator^{™} of manufacturer Adobe^{™} wherein you can blend objects to create and distribute shapes evenly between two objects. You can also blend between two open paths to create a smooth transition between objects, or you can combine blends of colors and objects to create color transitions in the shape of a particular object.

Said other shape may be morphologic image processed shape of the shape, a simple polygon or a regular polygon or a point, more preferably a point that is the centre of the halftone cell. With a point is meant to be a very small circle and not dimensionless shape. Said other shape may have a plurality of edges wherein one of said plurality of edges is not straight.

Preferably said halftone cells in the present invention and its preferred embodiments are arranged according to a tessellation using a tile, wherein preferably the threshold array has the same shape as said tile (Fig. 11). The threshold array is then used for digital halftoning regions of the continuous tone image wherein the threshold array is tiled over the continuous tone image according said tessellation. The tessellation is preferably a periodic tessellation with one tile or two tiles or more tiles and more preferably a monohedral tessellation, which is a tessellation with only one shape, though the shape may be rotated or flipped. The tessellation is preferably not an aperiodic tessellation.

Further one edge, two edges or more edges of said tile are preferably not straight, thus for example not a line or a plurality of lines but arced or have a part that is arced (Fig. 11). Said not straight edge is preferably a sinusoid, having a wavelength and amplitude. Preferably the tile has more than 2 edges wherein each of said edges is a sinusoid or even the same sinusoid. Said sinusoids have than a selected wavelength and selected amplitude.

An edge of a tile may also be a square wave; triangle wave or saw tooth wave. Said waves have also a certain length and amplitude. Each edge of said tile has preferably such said edge or flipped version of said edge.

In another preferred embodiment said tile is not an equiangular polygon thus for example not a regular polygon.

The first closed contour, represented by the non-image pixels is preferably surrounded by the second closed contour, represented by the image pixels, thus the second closed contour is hereby the outer closed contour (300) and the first closed contour is hereby an inner closed contour.

The second closed contour, represented by the image pixels may also be surrounded by the first closed contour, represented by the non-image pixels, thus the first closed contour is hereby the outer closed contour and the second closed contour is hereby an inner closed contour.

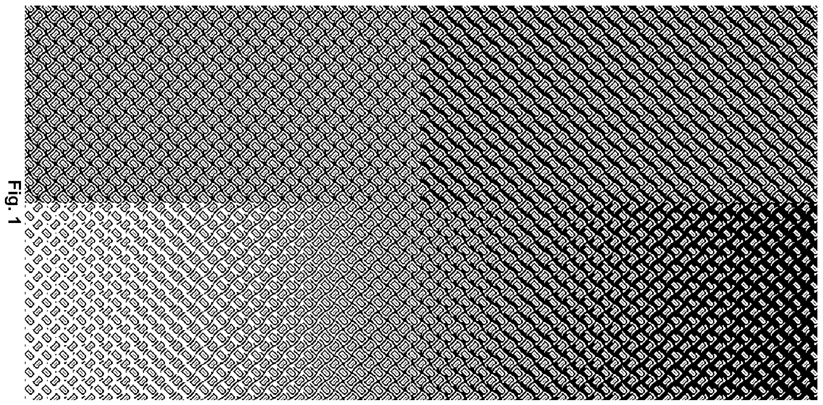

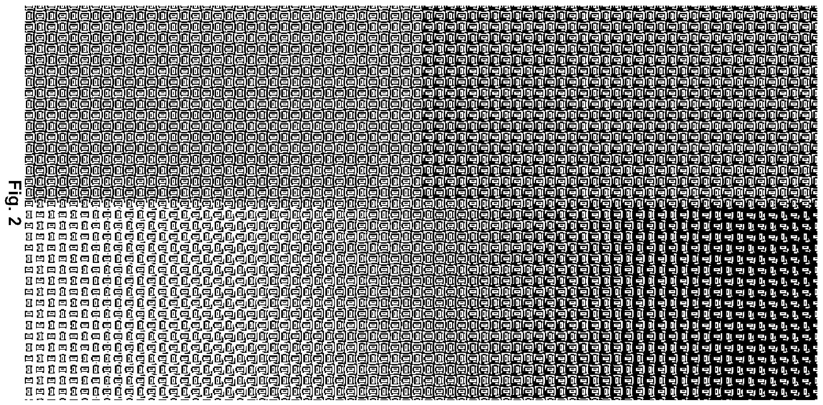

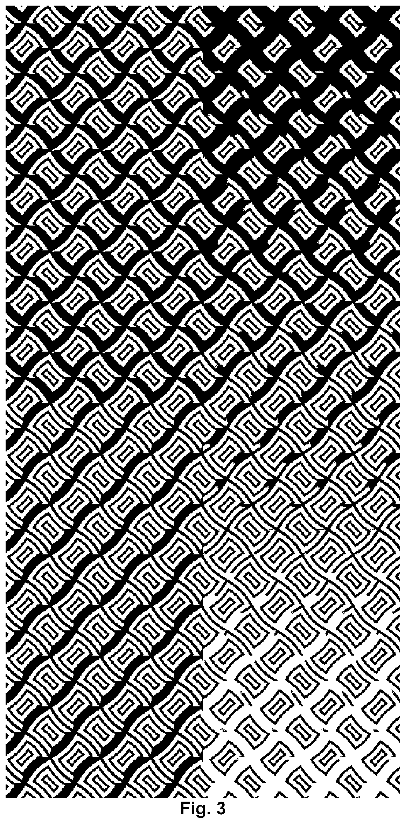

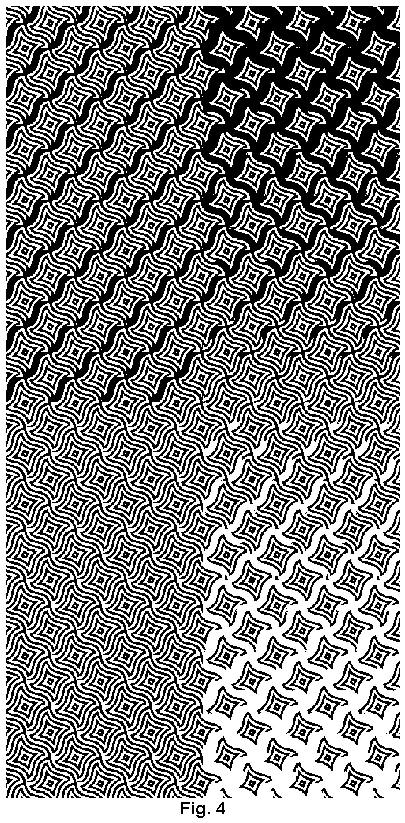

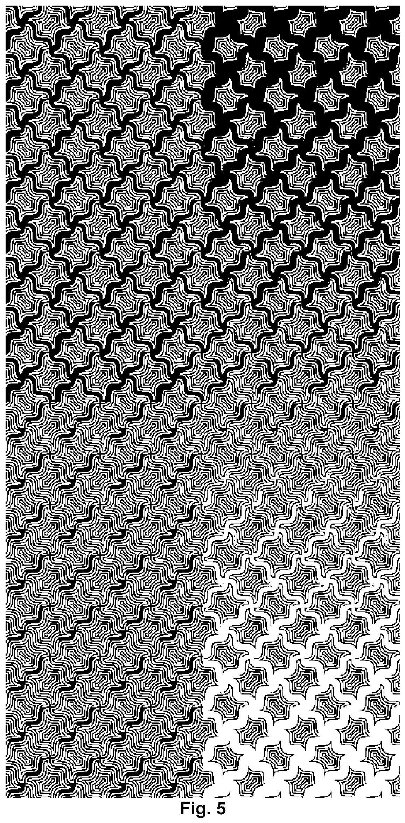

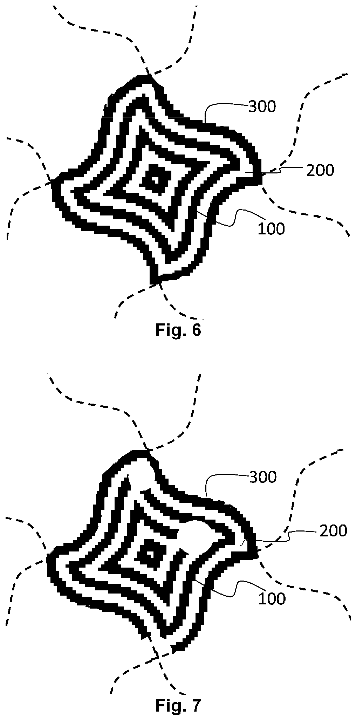

There may be more than one inner closed contours within the outer closed contour (FIG. 6-9). Said inner closed contours are represented by non-image pixels and/or represented by image-pixels for the outer closed contour.

A preferred embodiment of the present invention is: A method of digital halftoning a continuous tone image into a halftone raster image having halftone cells wherein each halftone cell has a shape;
wherein the method comprises the step:
- generating a halftone dot in said halftone cell with a threshold array for determining a first set of non-image pixels and a first set of image pixels in said halftone cell and wherein said first set of non-image pixels represent a first closed contour and said first set of image pixels represent a second closed contour; and wherein said first closed contour and/or second closed contour has a morphed shape from the shape of said halftone cell. Additionally, a third set of non-image pixels or third set of image-pixels is determined wherein the third set of non-image pixels represent a third closed contour or wherein the third set of non-image pixels represent a third closed contour, wherein said third closed contour has a morphed shape from the shape of said halftone cell.

After digital halftoning mid-tones or shadows the outer closed contour is preferably represented by the image pixels, thus the second closed contour. Then the dimensions of said outer closed contour is preferably the same as the shape of the halftoning cell.

In a preferred embodiment the non-image pixels of the first closed contour are neighbour pixels of image pixels of the second closed contour. This for example the case if there is an outer closed contour and inner closed contour. More preferably the second closed contour is larger than the first closed contour.

According the present invention and its preferred embodiments the second closed contour may be segmented by one or more non-image pixels and/or wherein the first closed contour may be segmented by one or more image pixels (Fig. 7).

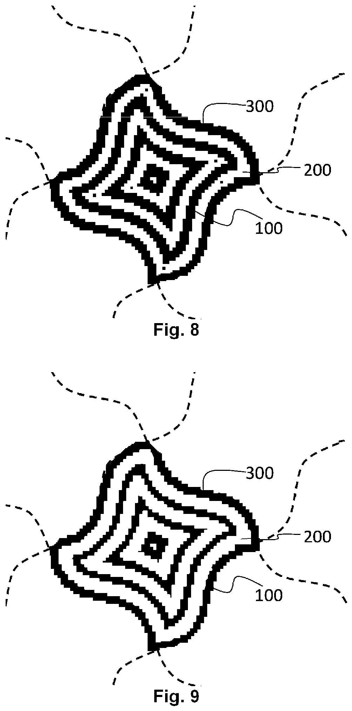

In the first closed contour an image pixel cluster may occur wherein said cluster is surrounded by non-image pixels of said first closed contour (Fig. 8). Said image pixel cluster influences the flow of ink in said first closed contour when the halftone raster image is used for rendering the continuous tone image on a printer or press.

Preferably the first closed contour has a thickness and the second closed contour has an other thickness and wherein the thickness is smaller than the other thickness to influence the flow of ink in said first closed contour when the halftone raster image is used for rendering the continuous tone image on a printer or press (Fig. 9). Also other contours within the outside contour may have different thicknesses. The determination of the thickness of a contour is hereby measured in perpendicular direction of the contour.

### Prepress workflow system

A prepress workflow system is a tool for managing digital documents, preferably defined in a page description languages (PDL) such as Postscript^{™}, wherein said documents are prepared for printing on a printing device, such as an offset press. Said tool is typically a data processing system adapted to manage and preparing said documents for printing or a computer program comprising instructions to manage and to prepare said documents for printing. Said computer program is preferably stored on a computer-readable storage medium. An example of such prepress workflow system is Apogee^{™} from AGFA NV.

In a preferred embodiment a prepress workflow system comprises a raster image processor which is capable of performing the method of digital halftoning from the present invention and its preferred embodiments. The prepress workflow system or raster image processor preferably further comprises means for transmitting the halftone raster image to a digital printing press or a plate setter for obtaining a printing plate. Said printing plate is preferably a lithographic plate or flexographic plate.

### Data processing system

A data processing system operates one or more computer programs for example a raster image processor and/or prepress workflow system. Part or whole of the data processing system and/or the functional units or blocks thereof may be implemented in one or more circuits or circuitry, such as an integrated circuit(s) or as an LSI (large scale integration). Each functional unit or block of the data processing system may be individually made into an integrated circuit chip. Alternatively, part or whole of the functional units or blocks may be integrated and made into an integrated circuit chip.

A software program, also called a computer program, which is operated in the data processing system is a program controlling a processor in order to realize functions of the various preferred embodiments according to the present invention. Therefore, information which is handled by the data processing system is temporarily accumulated in a RAM at the time of the processing. Thereafter, the information may be stored in various types of circuitry in the form of ROMs and HDDs, and read out by circuitry within, or included in combination with, the data processing system as necessary, and modification or write-in is performed thereto. As a recording medium storing the program, any one of a semiconductor medium (for example, the ROM, a non-volatile memory card or the like), an optical recording medium (for example, a DVD, an MO, an MD, a CD, a BD or the like), and a magnetic recording medium (for example, a magnetic tape, a flexible disc or the like) may be used. Moreover, by executing the loaded software program, the functions of the various preferred embodiments of the present invention are not only realized, but the functions of preferred embodiments of the present invention may be realized by processing the loaded software program in combination with an operating system or other application programs, based on an instruction of the program.

Moreover, in a case of being distributed prepress workflow system or even a distributed raster image processor, the program can be distributed by being stored in the portable recording medium, or the program can be transmitted to a server computer which is connected through a network such as the Internet. In addition, a portion of a terminal device, a wireless base station, a host system, or other devices, or the whole thereof may be realized as an LSI which is typically an integrated circuit. Each functional unit or block of the data processing system may be individually chipped, or a portion thereof, or the whole thereof may be chipped by being integrated. In a case of making each functional block or unit as an integrated circuit, an integrated circuit controller that controls the integrated circuits, is added.

Finally, it should be noted that the description referring to "circuit" or " circuitry" is in no way limited to an implementation that is hardware only, and as persons of ordinary skill in the relevant art would know and understand, such descriptions and recitations of "circuit" or "circuitry" include combined hardware and software implementations in which the circuit or circuitry is operative to perform functions and operations based on machine readable programs, software or other instructions in any form that are usable to operate the circuit or circuitry.

There is no limitation on the location of the data processing system, it may be located at a prepress bureau, at the printing device or even at a third party location.

Digital connections with the data processing system may be made in any form. It can be a connection using an optical fiber or a wireless connection, such as a Wi-Fi connection according to the IEEE 802.11 standard.

### Halftone raster image

The halftone raster image produced in the method of the present invention is suitable for rendering a continuous-tone image (CT), i.e. it creates the illusion of a continuous-tone image (CT) on a printed copy. The halftone cells are tiled arranged, preferably arranged according a tessellation with one or more tiles. In the present invention the halftone cells are tiled arranged above 1600 halftone cells per 1 inch² (> 248 halftone cells per 1 cm²), more preferably above 3600 halftone cells per 1 inch² (> 558 halftone cells per 1 cm²) and most preferably above 10000 halftone cells per 1 inch² (> 1550 halftone cells per 1 cm²). If the halftone cells are arranged on a line, the requirement implies that the screen frequency, i.e. the number of halftone cells arranged next to each other per length unit in the direction that yields the greatest value, is above 40 lines per inch (LPI; 15.7 lines/cm), more preferably above 60 LPI (23.6 lines/cm) and most preferably above 100 LPI (39.4 lines/cm).

If said screen frequency is below 40 lines per inch (LPI; 15.7 lines/cm) or below 1600 halftone cells per 1 inch², the halftone dots become visible at viewing distance, also called reading distance, which is about 20 cm. Such low screen frequencies are typically used in artistic screening, which is used for decorative purposes such as patterned illustrations, wherein it is intended that the individual dots are visible to the naked eye. Halftone raster images wherein the halftone dots are clearly visible at viewing distance are therefore not suitable in the method of the present invention.

As explained above, a halftone cell on its turn consists of a grid of pixels and the spatial frequency thereof, called resolution, is expressed as dots per inch (DPI) or pixels per inch (PPI). In case the halftone raster image is written by means of a scanning laser on e.g. a film or a printing plate, the pixels are also called laser dots and the resolution then refers to the number of laser lines per inch. The halftone raster image produced in the method of the present invention has preferably a resolution larger than 600 DPI, more preferably larger than 1200 DPI. Higher resolutions up to 9600 DPI may also be used, e.g. for the printing of security features and security documents.

Since a printing plate can transfer only a single colour, it is evident that the halftone raster image used in the method of the present invention is a monochrome image, which may represent a colour selection of a multi-colour printing process, e.g. one of the 4 basic colours in CMYK printing.

The quality of the printed image is preferably checked with colour density measurement. The colour density values can then be used as input parameters of the prepress computer system which produces the halftone raster image, which is thereby adjusted so that the quality of the printed image is improved in a subsequent press run and/or so that more ink is saved in a subsequent press run.

### Halftone cells

The halftone raster image produced in the method of the present invention comprises preferably regularly tiled halftone cells. The cells may be tiled along a triangular, rectangular or hexagonal grid and more preferably along a square grid but preferably arranged according a tessellation with one or more tiles, wherein most preferably said tile has minimum one edge which is not straight. Said tile may be in the present invention a simple polygon (=without crossing boundaries), more preferably a convex or concave polygon and most preferably not a regular polygon.

The shape of the halftone cell preferably, more preferably all halftone cells in the halftone raster image, has N-edges wherein N is more than 2 and preferably less than 32 edges and most preferably less than 16 edges. One of said edges is preferably arced more preferably a polynomial which is not a straight line and most preferably a sinusoid which is not a straight line. Said sinusoids have than a selected wavelength and selected amplitude. Said arced edge are of course discretized for said digital halftoning method but they represent an arced edge, they approximate an arced edge. Higher the image resolution for a certain number of halftone cells per cm², better said approximation.

The halftone cells themselves also consist of a grid, more particularly a grid of pixels, which may be image pixels or non-image pixels. These pixels preferably have the shape of a regular polygon or convex polygon, e.g. a triangle, a square, a rectangle, a rhombus or a hexagon. The figures show examples of preferred embodiments, wherein the halftone cells consist of a grid of square pixels.

The halftone raster image produced in the method of the present invention comprises halftone cells which have a closed contour with non-image pixels and a closed contour with image pixels wherein the shape of said closed contours are derived from the shape of the halftone cell.

An 'image pixel cluster' in the present invention is defined as image pixels to be adjacent if they share at least one edge or corner of the polygon. Analogue is an 'non-image pixel cluster' in the present invention defined as non-image pixels to be adjacent if they share at least one edge or corner of the polygon.

The closed contour with image pixels (100) according the present invention may comprise one or more image pixel clusters but they still represent a derivation of the shape of the halftone cell wherein the halftone dot is comprised. The closed contour with non-image pixels (200) according the present invention may comprise one or more non-image pixel clusters but they represent a derivation of the shape of the halftone cell wherein the halftone dot is comprised.

Said derivation is in the present invention a morphed shape e.g. a morphological image processed shape of said shape such as a scaling of said shape or eroding of said shape. The morphologic image processed shape may also a blending from said shape to another shape. Morphologic image processing is known in the art of image processing. It is a collection of (non-)linear operations related to the shape or morphology of features in an image. The morphed shape is hereby discretized. An inner closed contour represented by non-image pixels or image-pixels preferably has an eroded or morphed shape from its nearby outer closed contour.

Contrary to conventional AM dots which represent the same dot percentage, the image clusters used in the present invention allow to obtain a printed image of the same image density with less ink. Without being limited by the underlying mechanism, it is at present assumed that the halftone cells having said closed contour representations as described above, when compared to a conventional AM halftone dot representing the same relative image density, either absorb a thinner ink film on the ink accepting areas of the plate and/or provide a better spreading of the ink film into the empty (non-image) areas between closed contours with image pixels. Ink and paper are the major cost factors of a printer, so even a reduction of the ink consumption by a few percent represents a high cost saving. Optimization of the halftone raster image in relation to the substrate that is to be printed, e.g. by adjusting the number, size, shape and/or distribution of image clusters in the halftone cells, can lead to even more ink saving.

Less consumption of ink provides additional advantages resulting therefrom, e.g. faster drying and/or less energy consumption by drying equipment such as curing units and ovens. Faster drying is particularly beneficial for printing on uncoated plastic foils and in newspaper printing. The better spreading of the ink also reduces ink setoff, i.e. the transfer of ink from one printed copy to the backside of another copy lying on top of it, for example in the press delivery tray. Shine-through, also called print-through, whereby images become visible at the backside of the substrate, e.g. a thin, ink absorbing substrate as used for the printing of newspapers, is reduced as well. For all these reasons, the method of the present invention is especially advantageous when performed on a perfecting press, i.e. a press that allows the simultaneous printing on both sides of the substrate in one pass through the press.

The shape of the halftone cell preferably has one, 2, 3, 4, 5, 6, 7, 8 different axes of symmetry or even more than 8. In the preferred embodiment with the arrangement according a tessellation with a tile, said tile has preferably also one, 2, 3, 4, 5, 6, 7, 8 different axes of symmetry or even more than 8.

The halftone raster image used in the present invention may contain a combination of different types of halftone dots, e.g. AM halftone dots wherein all image pixels are grouped in a single cluster.

The halftone dot in the present invention has the unique characteristic that all its non-image pixels in the first closed contour are in contact with one another so that an extent of ink spreading is obtained. It shall be clear to the skilled person that the same dot coverage can be produced with different closed contours.

### Threshold array

According to the present invention, the halftone raster image is generated by a threshold array. Digital halftoning by means of a threshold array, sometimes also called threshold matrix or threshold tile, is known in the art. When used for multi-colour printing, the number of threshold arrays is preferably the same as the number of colour channels in the original continuous-tone image. Digital halftoning with a threshold array typically implies that the original image is sampled into cells which are mapped on the threshold array. The local density value of the original image is then compared with each of the values in the array (if necessary, the density range of the original image is adjusted so that it is equal to the range in the array). The output pixel is set to an non-image pixel (='0') if the original density value is lower than the threshold value of said pixel. Otherwise, if the density value is equal to or exceeds the threshold value, the output pixel is set to an image pixel (='1'). These steps are repeated for all cells in the image.

The dimension of the array, i.e. the number of pixels per halftone cell, may depend on various factors such as the resolution of the image setter and the desired quality of the printed image. The array is preferably arranged as a square (nxn dimension) or a rectangle (mxn, with m>n) but it may have the same shape as the halftone cell. If the halftone cells are arranged according a tessellation with a tile, the array has preferably the same shape as said tile.

In order to produce higher relative image densities, the threshold array is designed in such a way that the number and/or the size of the image pixel clusters increases in line with the corresponding density of the original image.

While the image density of the halftone cell grows by adding image pixels, it is preferred to keep the non-image pixels together in non-image clusters, which are defined as mutually separated groups of adjacent non-image pixels, such as in the present invention the non-image pixels representing the first countour.

By keeping the number of non-image clusters as low as possible in the shadows of the image, the ink can spread to a higher extent than when the non-image pixels are isolated or distributed over multiple clusters. In that way, ink can also be saved in the shadow areas of the image. The growing by adding image pixels is in the present invention first of all a growing in length along said second contour.

### Other preferred embodiments

A preferred embodiment is a method of reproducing a continuous-tone image with a printing press, the method comprising the steps of:
- digital halftoning a continuous-tone image into a halftone raster image according the present invention and its preferred embodiments;
- exposing the halftone raster image on a printing plate precursor;
- developing said precursor, thereby obtaining a printing plate; mounting the printing plate on a printing press;
supplying ink to the printing plate and transferring the ink from the printing plate to a substrate. The printing plate is preferably a lithographic or a flexographic printing plate.

The printing plates used in said method are obtained by the exposure of the halftone raster image on a light- or heat-sensitive material called printing plate precursor. The plate precursor can be positive or negative working. A positive plate precursor has a coating which after exposure and development accepts ink at non-exposed areas and no ink at exposed areas. A negative plate accepts ink at exposed areas and no ink at non-exposed areas. The image pixels shown in the Figures define ink-accepting areas of the plate and thus correspond to exposed or non-exposed areas of a negative or positive plate precursor respectively.

Lithographic plates are typically obtained by exposing the halftone raster image on the light- or heat-sensitive coating of a printing plate precursor by means of a scanning laser, preferably a violet or a near infrared laser, or another digitally modulated light source, such as a digital mirror device, LCD or LED display. After processing the exposed precursor with a suitable development liquid, a lithographic printing plate carrying the halftone raster image of the present invention is obtained. That plate can then be mounted on a lithographic printing press, preferably an offset press, wherein ink is supplied to the plate which is then transferred onto the substrate to be printed. Alternatively, the exposed precursor can be mounted directly on the press, i.e. without any preceding liquid treatment or other development, and the development of the image may then occur by means of the ink and/or fountain which is supplied to the plate at the start of the press.

Flexographic plates are generally obtained by UV exposure of a photopolymer coating, typically with a UV lamp through a mask which can be a graphic film in contact with the photopolymer coating or an in-situ mask that is present on top of the photopolymer coating. The mask is preferably obtained by exposing the halftone raster image on the film or on the in-situ mask layer by means of a scanning laser, preferably a near infrared layer.

The substrate on which the halftone raster image may be printed can be of any kind, e.g. plastic films or foils, release liner, textiles, metal, glass, leather, hide, cotton and of course a variety of paper substrates (lightweight, heavyweight, coated, uncoated, paperboard, cardboard, etc.). The substrate may be a rigid work piece or a flexible sheet, roll or sleeve. Preferred flexible materials include e.g. paper, transparency foils, adhesive PVC sheets, etc., which may have a thickness less than 100 micrometres and preferably less than 50 micrometres. Preferred rigid substrates include e.g. hard board, PVC, carton, wood or ink-receivers, which may have a thickness up to 2 centimetres and more preferably up to 5 centimetres. The substrate may also be a flexible web material (e.g. paper, adhesive vinyl, fabrics, PVC, textile). A receiving layer, for example an ink-receiving layer, may be applied on the substrate for a good adhesion of the reproduced image on the substrate.

Another preferred embodiment is a method for manufacturing a security document comprising the step:
- digital halftoning a continuous-tone image into a halftone raster image according the present invention and its preferred embodiments;
- lay-outing said halftone raster image in the security document. Preferably said continuous-tone image is generated from a selected vector graphic, more preferably said vector graphic is generated from a selected identification code.

A security document is a printed document or lay-outed document which comprises one or more content objects to prevent copying, forgery, tampering and to battle against counterfeiting and to protect a brand of brand owners. Examples of security documents are tax labels, lottery tickets, event tickets, design vouchers, identity cards, banknotes, legal documents and official documents, certificates, passports, identity documents, driver's licenses or packages for luxury or pharmaceutical products.

A security document is preferably lay-outed in a digital assembly system, such as a desktop publishing (DTP) software package or a web-design software package. Such system comprises than a graphic base editor wherein security enabled content objects can be added in a document. It has preferably a modular approach to add one or more security features in the security document. Examples of such digital assembly system for security printing are :Fortuna^{™} by Agfa NV; security design software of JURA^{™}, ONE of KBA^{™} and the recently developed powerful security design tool to create unique, hard-to-copy elements and protect your vouchers, tickets, documents, labels, packaging... against forgery: Arziro^{™} Design from Agfa NV. The halftone cells generated by said preferred embodiment generates patterns that are difficult to counterfeit. Repeat and/or geometric patterns are used regularly in said security documents because they are difficult to analyse and to copy and thus ideal to prevent forgery, tampering or counterfeiting. Said preferred embodiment enhances said prevention which is an advantage.

In another preferred embodiment the shape of the halftone cell in the present invention and its preferred embodiments is determined according an identification code. The present invention discloses a decoding method wherein a rendered halftone raster image according the present invention is image captured whole or partly. From said captured image a shape of a halftone raster cell may be determined, which may be compared to a database comprising a plurality of shapes linked to an identification code. If a match is found the identification code embedded in said rendered halftone raster image can be determined. The number and/or position and/or size and/or curviness of arcs and/or number and/or position and/or size of straight lines in the shape may also be determined which may be translated to an identification code. The rendered image pixels and/or the non-image pixels in said halftone cell may additional also be analysed to determine the identification code.

Hereby the present invention discloses thus also an encoding method for generating a shape depending a selected identification code. Said shape comprises than a number and/or position and/or size and/or curviness of arcs and/or number and/or position and/or size of straight lines whereof an identification code may be determined. Said shape is then used in the digital halftoning method of the present invention. Preferably also the first and second closed contour are determined by said selected identification code.

If the halftone cells are arranged according to a tessellation using a tile as disclosed in a preferred embodiment of the present invention than said tessellation may also be determined for determining additionally the identification code.

Said identification code may be used for track-and-tracing workpieces or packages on which said code is attached or printed.

Said identification code may be used for adding secure content for anti-counterfeiting purposes on an item on which said code is attached or printed.

## Claims

1. A method of digital halftoning a continuous tone image into a halftone raster image having halftone cells wherein each halftone cell has a shape; wherein the method comprises the step:
- generating a halftone dot in said halftone cell with a threshold array for determining non-image pixels and image pixels in said halftone cell and wherein said non-image pixels represent a first closed contour (200) and image pixels represent a second closed contour (100, 300);
and wherein the halftone cells are arranged according to a periodic tessellation using a tile; and **characterised in that**
said first closed contour and/or second closed contour
has an eroded shape from the shape of said halftone cell and each halftone cell has minimum one edge having an arced part.

2. The method according to claim 1 wherein non-image pixels of the first closed contour (200) are neighbour pixels of image pixels of the second closed contour (100, 300).

3. The method according to claim 2 wherein the second closed contour (100, 300) is larger than the first closed contour.

4. The method according to any of the claims from 1 to 3 wherein the second closed contour (100; 300) may be segmented by one or more non-image pixels and/or wherein the first closed contour (200) may be segmented by one or more image pixels.

5. The method according to any of the claims from 1 to 3 wherein the first closed contour (200) comprises an image pixel cluster surrounded by non-image pixels of said first closed contour (200).

## Patentansprüche

1. Ein Verfahren zur digitalen Rasterung eines Halbtonbildes zu einem Rasterbild mit Rasterzellen, wobei jede Rasterzelle eine Form aufweist, wobei das Verfahren folgenden Schritt umfasst:
- Erzeugung eines Rasterpunktes in der Rasterzelle mit einer Schwellwertmatrix zur Bestimmung von Nicht-Bildpixeln und Bildpixeln in der Rasterzelle und wobei die Nicht-Bildpixel eine erste geschlossene Kontur (200) darstellen und Bildpixel eine zweite geschlossene Kontur (100, 300) darstellen,
und wobei die Rasterzellen unter Verwendung einer Kachel gemäß einer regelmäßigen Mosaik angeordnet sind und **dadurch gekennzeichnet, dass** die erste geschlossene Kontur und/oder die zweite geschlossene Kontur eine erodierte Form der Form der Rasterzelle aufweisen und jede Rasterzelle mindestens einen Rand mit einem bogenförmigen Teil aufweist.

2. Das Verfahren nach Anspruch 1, wobei Nicht-Bildpixel der ersten geschlossenen Kontur (200) Nachbarpixel von Bildpixeln der zweiten geschlossenen Kontur (100, 300) sind.

3. Das Verfahren nach Anspruch 2, wobei die zweite geschlossene Kontur (100, 300) größer ist als die erste geschlossene Kontur.

4. Das Verfahren nach einem der Ansprüche 1 bis 3, wobei die zweite geschlossene Kontur (100, 300) durch ein oder mehrere Nicht-Bildpixel segmentiert sein kann und/oder wobei die erste geschlossene Kontur (200) durch ein oder mehrere Bildpixel segmentiert sein kann.

5. Das Verfahren nach einem der Ansprüche 1 bis 3, wobei die erste geschlossene Kontur (200) einen durch Nicht-Bildpixel der ersten geschlossenen Kontur (200) umgebenen Bildpixelcluster umfasst.

## Revendications

1. Procédé pour le tramage numérique d'une image à tons continus en une image tramée en demi-teintes comprenant des cellules de demi-teinte, **caractérisé en ce que** chaque cellule de demi-teinte présente une forme, **caractérisé en ce que** le procédé comprend l'étape consistant à:
- générer un point de demi-teinte dans ladite cellule de demi-teinte ayant une matrice de valeurs seuil pour déterminer des pixels exempts d'image et des pixels d'image dans ladite cellule de demi-teinte et **caractérisé en ce que** lesdits pixels exempts d'image représentent un premier contour fermé (200) et que des pixels d'image représentent un deuxième contour fermé (100, 300),
et **caractérisé en ce que** les cellules de demi-teinte sont disposées selon une mosaïque régulière en utilisant un carreau et que ledit premier contour fermé et/ou ledit deuxième contour fermé présentent une forme érodée de la forme de ladite cellule de demi-teinte et que chaque cellule de demi-teinte présente au moins un bord ayant une partie en forme d'arc.

2. Procédé selon la revendication 1, **caractérisé en ce que** des pixels exempts d'image du premier contour fermé (200) sont des pixels voisins de pixels d'image du deuxième contour fermé (100, 300) .

3. Procédé selon la revendication 2, **caractérisé en ce que** le deuxième contour fermé (100, 300) est plus grand que le premier contour fermé.

4. Procédé selon l'une quelconque des revendications 1 à 3, **caractérisé en ce que** le deuxième contour fermé (100, 300) peut être segmenté par un ou plusieurs pixels exempts d'image et/ou que le premier contour fermé (200) peut être segmenté par un ou plusieurs pixels d'image.

5. Procédé selon l'une quelconque des revendications 1 à 3, **caractérisé en ce que** le premier contour fermé (200) comprend un cluster de pixels d'image entouré par des pixels exempts d'image dudit premier contour fermé (200).
